# EUROPÄISCHE PATENTSCHRIFT

(11) **EP 3 584 387 B1**
(45) Veröffentlichungstag und Bekanntmachung des Hinweises auf die Patenterteilung: **29.07.2020**
(21) Anmeldenummer: 19190530.6
(22) Anmeldetag: 13.10.2017
(51) Int. Cl.: E04F 13/10, E04F 13/08

(54) **OSB-PLATTE UND VERWENDUNG DERSELBIGEN**
OSB PLATE AND USE OF THE SAME
PANNEAU OSB ET SON UTILISATION

(43) Veröffentlichungstag der Anmeldung: 25.12.2019
(62) Teilanmeldung aus: 17196384.6
(73) Patentinhaber: SWISS KRONO Tec AG, 6004 Luzern (CH)
(72) Erfinder: SAUTER, Harald, 72461 Albstadt (DE)
(74) Vertreter: Maikowski & Ninnemann Patentanwälte Partnerschaft mbB

(56) Entgegenhaltungen:
- EP-A1- 3 075 923
- WO-A1-2004/053257
- WO-A1-2016/113721
- WO-A1-2017/013221
- US-A- 2 328 051
- US-A1- 2010 236 171

## Beschreibung

Die vorliegende Erfindung betrifft eine modifizierte OSB Platte mit einem neuen Verbindungsprofil und deren Verwendung zur Wand- und/oder Deckenverkleidung.

### Beschreibung

Grobspanplatten, auch OSB-Platten (Oriented Strand Board) genannt, sind Holzwerkstoffplatten, die aus langen schlanken Spänen (Strands) hergestellt werden. OSB-Platten werden zunehmend im Holz- und Fertighausbau eingesetzt, da OSB-Platten leicht sind und trotzdem die an Bauplatten gesetzten statischen Anforderungen erfüllen. So werden OSB-Platten als Bauplatten und als Wand- oder Dachbeplankung oder auch im Fußbodenbereich eingesetzt.

Die in den verschiedensten Bereichen im Innenausbau eingesetzten OSB-Platten, müssen beim Verlegen miteinander fixiert werden. Eine Fixierung wird zum Beispiel durch die Ausbildung von einer entlang einer Längs- und/oder Querkante vorgesehenen Nut und einer an der gegenüberliegenden Längs- und/oder Querkante ausgebildeten Feder bewirkt, wobei die Feder in die Nut eingreift (sog. Nut-Feder-Verbindung).

Bei diesen sogenannten Nut-Feder-Verbindungen handelt es sich um Verbindungen, die eine formschlüssige Verriegelung zum Beispiel von Bodenpaneelen bei einer schwimmenden Verlegung ermöglichen. Nut-Feder-Verbindungen greifen ineinander und lassen sich daher nur ineinanderschieben bzw. stecken. Hierdurch können in horizontaler Richtung Haltekräfte von einer Bodenplatte in eine damit verbundene benachbarte Bodenplatte übertragen werden und Unebenheiten im Boden ausgeglichen werden.

Eine vertikale Verlegung von OSB Platten zum Beispiel als Wandpaneele mit einer Nut-Feder-Verbindung ist allerdings für den Anwender mit einigem Kraftaufwand verbunden und somit unpraktisch.

Aus der WO 2017/013221 A1 sind Bodenpaneele bekannt, die im Wesentlichen einen modifizierten Falz aufweisen, der bei einer Verklebung eine gute Verbindung der Paneel Kanten ermöglicht und sich somit auch für eine schwimmende Verlegung für Fußböden eignet. Der hier vorgeschlagene Ansatz verwendet Paneel Kanten mit Kantenbrechungen, die eine Hinterschneidung der Paneele hervorrufen. Jedoch wären Paneele mit diesem Profileinsatz für eine Beplankung eines Ständerwerkes zur Herstellung einer Wand nicht geeignet, da auch hier ein höherer Kraftaufwand seitens der verlegenen Person notwendig ist.

US 2010/0236171 A1 offenbart Holzwerkstoffplatten mit einer Nut- und Federverbindung und einem in einer Einkerbung der Holzwerkstoffplatte angeordneten Leimschlauch, der aufgebrochen wird, wenn die Holzwerkstoffplatte mit Kraft nach unten gedrückt wird.

EP 3 075 923 A1 beschreibt eine Holzwerkstoffplatte mit einer Nut- und Federverbindung, wobei in die Nut ein Klebstoffbehältnis eingebracht wird, welches von in der Nut vorgesehenen alternierenden symmetrischen Erhebungen bei Einfügen der Feder in die Nut geöffnet wird.

In der DE 20 2014 105 181 U1 werden Wandplatten für den Trockenbau aus einem Holzwerkstoff verwendet, die an den Schmalseiten einen Stufenfalz aufweisen.

Zusätzlich ist es zur Vermeidung eines Auseinandertriftens der so miteinander verbundenen Platten und einer damit einhergehenden Spaltbildung an der Verbindungsstelle notwendig, die einzelnen OSB-Platten entweder zusätzlich miteinander zu verleimen oder durch Schrauben auf Balken oder Holzrahmenkonstruktionen zu fixieren. Dies ist insbesondere bei vertikalen Anwendungen erforderlich.

Wie erwähnt können OSB Platten als Bauplatten, insbesondere in der Herstellung von Fertighäusern verwendet werden. Zum Beispiel wird für den Fall, dass OSB Platten für Wandkonstruktionen verwendet werden, die Wand aus einem soliden Holzrahmen mit entsprechenden Balken hergestellt, die von beiden Seiten mit OSB Platten abgedeckt sind. Der Zwischenraum zwischen den Rahmenelementen wird in geeigneter Weise isoliert.

Typischerweise wird die Seite der Konstruktionswand, die zur Innenseite des Hauses oder Gebäudes zeigt, mit einer Gipsbauplatte abgedeckt. Gipsbauplatten sind normalerweise jedoch sehr schwer (Dichte von über 1200 kg/m³) und erfordern Kenntnis und einigen Aufwand bei Anbringung. Die Oberfläche erfordert zudem das Aufbringen einer Gipsschicht und Spezialwerkzeuge sind für Schneidzwecke erforderlich.

Entsprechend besteht ein Bedürfnis nach alternativen bzw. dem Verzicht zu Gipsbauplatten für den Innenausbau von Gebäuden, welche in einfacher Weise herstellbar und miteinander verlegbar und direkt beschichtbar sind, und die Nachteile der konventionell verwendeten Gipsbauplatten überkommen.

Der vorliegenden Erfindung liegt daher die technische Aufgabe zugrunde, die angesprochenen Nachteile der bekannten Systeme zu beheben, und ein einfaches, aber effizientes Verfahren bereitzustellen, das dem Benutzer bzw. Verarbeiter eine einfache Verlegung von OSB Platten als Wand- oder Deckenpaneele ohne zusätzliche Kosten ermöglicht. Zudem soll die bereitgestellten OSB Platten eine Alternative zu den konventionell verwendeten Gipsbauplatten darstellen.

Die gestellte Aufgabe wird erfindungsgemäß durch eine OSB-Platte mit den Merkmalen des Anspruchs 1 gelöst.

Demnach wird eine OSB- Platte mit mindestens zwei sich einander gegenüberliegenden Plattenkanten, insbesondere zwei sich gegenüberliegenden Längskanten, bereitgestellt, wobei jede der zwei sich gegenüberliegenden Plattenkanten einen einfachen Falz aufweist, wobei der Falz in der einen Plattenkante komplementär zu dem Falz in der gegenüberliegenden Plattenkante ist.

Erfindungsgemäß ist in bzw. auf mindestens einem der sich gegenüberliegende Falze mindestens ein Leimschlauch (oder eine Leimschnur) in mindestens einer in dem unteren Falz vorgesehenen Nut angeordnet. Die Nut kann auch als Einlegekanal für den Leimschlauch bezeichnet werden.

Im Sinne der vorliegenden Erfindung ist unter einem Falz ein Absatz oder Fuge in einer Platte (oder allgemein in einem Körper) zu verstehen. Der Falz (bzw. Absatz) ist jeweils am Rand bzw. an der Kante der OSB Platte vorgesehen und ermöglicht eine flächige Aneinanderreihung der OSB Platten. Insbesondere bilden die an den gegenüberliegen Plattenkanten vorgesehenen, komplementären Falze im verbundenen Zustand miteinander eine stufenförmige Verbindung.

Ein einfacher Falz kann auch so beschrieben werden, dass in die Plattenkante ein gerader Absatz mit einer vorbestimmten Tiefe und Breite z.B. mittels Fräsen eingebracht wird. Entsprechend wird ein Absatz (oder Falz) gebildet, bei dem die Kante in einem Bereich der Platte mit einer vorbestimmten Breite hervorsteht und in einem anderen Bereich mit einer vorbestimmten Tiefe zurücksteht.

Im Falle von komplementären Falzen (oder Absätzen) steht der Falz in einer Plattenkante z.B. in einem unteren Bereich der Plattenkante hervor und in einem oberen Bereich zurück, wobei die gegenüberliegende Plattenkante einen komplementären Falz aufweist, der im oberen Bereich der Plattenkante hervorsteht und im unteren Bereich zurücksteht.

Beim Verlegen der OSB-Platten ermöglicht der erfindungsgemäße Falz ein einfaches Ablegen der OSB-Platten aufeinander. Aus diesem Grunde sind die erfindungsgemäßen OSB-Platten auch gut für eine Beplankung eines Ständerwerkes zur Herstellung einer Wand geeignet, im Gegensatz zu den Nut-Feder-Verbindungen, die sich nur ineinanderschieben bzw. stecken lassen.

In einer Ausführungsform der vorliegenden OSB-Platte beträgt die Breite des Falzes in den sich gegenüberliegenden Plattenkanten jeweils zwischen 20 und 40 mm, bevorzugt zwischen 25 und 35 mm, insbesondere bevorzugt 30 mm.

Die Falzbreite ist in den sich gegenüberliegenden Plattenkanten bevorzugt gleich. Es ist aber generell auch vorstellbar, dass die Falzbreite in den gegenüberliegenden Plattenkanten unterschiedlich ist.

In einer weiteren Ausführungsform der vorliegenden OSB-Platte entspricht die Tiefe des Falzes mindestens einem Drittel, bevorzugt mindestens der Hälfte der Dicke der OSB-Platte entspricht. Dabei kann die Dicke der OSB-Platte zwischen 9 und 50 mm, bevorzugt zwischen 10 und 25 mm, insbesondere bei 18 mm liegen. Entsprechend beträgt die Tiefe des Falzes für den Fall, dass die Falztiefe der Hälfte der Plattendicke entspricht, zwischen 4,5 und 25 mm, bevorzugt zwischen 5 und 12,5 mm, insbesondere 9 mm.

Der Falz wird mittels geeigneter Werkzeuge in die Platte eingebracht. Insbesondere erfolgt ein Fräsen und Abtragen der Holzplatte an den Kanten.

In einer nicht beanspruchten Variante ist der Leimschlauch auf dem Falz durch Klebepunkte verliersicher befestigt. Die Öffnung des Leimschlauchs erfolgt durch das Zusammenpressen der Falzverbindung, insbesondere durch den Druck auf Grund zusätzlicher mechanischer Verbindungsmittel, wie Nägel, Klammern oder Schrauben. Die mechanischen Verbindungsmittel pressen die Falze zusammen und reichen auch bis in dahinter befindliches Ständerwerk. Der Leimschlauch kann perforiert ausgeführt sein und bildet in diesen Bereichen definierter Schwächung eine Sollbruchstelle für leichteres Öffnen aus.

Gemäß der Erfindung ist der Leimschlauch in eine Nut eingelegt und optional durch Klebepunkte verliersicher in der Nut befestigt.

In einer bevorzugten Ausführungsform ist diese Nut lediglich in dem unteren Falz vorgesehen; d.h. in der Falz die in der OSB-Platte vor dem Verlegen bzw. Verkleben für den Anwender in der Draufsicht erkennbar ist.

Es ist vorgesehen, dass die mindestens eine Nut für den mindestens einen Leimschlauch entlang der gesamten Länge der Plattenkante verläuft. Der Leimschlauch bzw. der im Leimschlauch enthaltende Leim dient zur Verklebung der Falze als Verbindungsstellen der OSB-Platten und zur Luftdichtheit an der Verbindung der jeweiligen OSB-Platten.

Es ist weiterhin vorgesehen, dass die mindestens eine Nut für den mindestens einen Leimschlauch mit einem Radius zwischen 1 und 5 mm, bevorzugt zwischen 2 und 4 mm, insbesondere bevorzugt 3 mm in die Oberfläche der Falz eingebracht ist. Dabei wird die Nut in die Oberfläche des Falzes eingefräst oder eingesägt, z.B. mittels eines Fräsers oder eines Sägeblattes mit der Form der einzubringenden Nut. Die Nut kann eine halbrunde Form oder auch eine flachere, ovale Form aufweisen. Im Falle einer ovalen Form der Nut wäre der Querschnitt des Leimschlauches ebenfalls oval ausgeführt.

Es wäre aber auch vorstellbar, dass eine Nut jeweils in sich gegenüberliegenden Falzen vorgesehen ist; d.h. sowohl in dem unteren als auch in dem komplementären oberen Falz.

Gemäß der Erfindung ist auf dem oberen Falz ein erhabener Steg mit alternierenden symmetrischen Erhebungen vorgesehen, der komplementär zu der Nut im unteren Falz angeordnet ist. Die alternierenden symmetrischen Erhebungen bewirken bei einem Zusammenbringen bzw. Aufeinanderlegen von sich gegenüberliegenden Falzen aufgrund der dabei angewendeten Kräfte beziehungsweise des aufgebrachten Drucks ein Öffnen bzw. eine Zerstörung des in der Nut eingelegten Leimschlauches. Der Klebstoff wird freigesetzt und verteilt sich in dem Bereich des Falzes. In einer bevorzugten Ausführungsform weisen die Erhebungen beziehungsweise Erhöhungen auf dem mindestens einen Falz eine jeweils von der Holzwerkstoffplatte wegweisende spitzförmig zulaufende Geometrie auf. Dabei sind die Seiten der jeweiligen Erhebung bevorzugter Weise jeweils gleich lang. Die Höhe und Winkelabmessungen zwischen den Seiten der bevorzugt spitzförmig zu laufenden Erhebungen können je nach Plattenstärke und Falzgeometrie variiert werden. So können die Winkelabmessungen des inneren Winkels der spitzförmig zu laufenden Erhebung variieren, wobei ein kleiner innerer Winkel eine spitzere Erhebung bedeutet. Die Winkelgröße sollte abhängig sein von dem für dem Leimschlauch verwendeten Material und die für die Öffnung des Leimschlauches aufzubringende Kraft bzw. Druck Wird zum Beispiel ein festeres Material für den Leimschlauch verwendet, so sollte die Erhebung relativ spitzwinklig ausfallen, um ein Öffnen des Leimschlauches zu ermöglichen. Im umgekehrten Falle kann bei der Verwendung eines weicheren Materials für den Leimschlauch eine weniger spitze Erhebung ausreichend zum Öffnen des Leimschlauches sein. Die Erhebungen können eine Höhe von 1 bis 5 mm, bevorzugt 2 bis 4 mm aufweisen.

Es ist insbesondere bevorzugt, wenn der mindestens eine Leimschlauch als durchgängiger Schlauch, zum Beispiel in Form eines extrudierten Schlauches, ausgebildet ist, der den Leim bzw. Klebstoff enthält.

In einer anderen Ausführungsform der vorliegenden OSB-Platte ist der mindestens eine Leimschlauch entlang seiner Länge in einzelne Segmente bzw. Kammern unterteilt. Die Segmente bzw. Kammern sind bevorzugt von gleicher Größe, das heißt weisen gleiche Volumina zur Aufnahme einer gleichen Menge an Klebstoff auf. Die Segmente bzw. Kammern können durch Schweißnähte oder sogenannte Siegelstellen z.B. mit einer Breite zwischen 1 und 3 mm, bevorzugt 2 mm gebildet werden. Auch ist eine Unterteilung des Schlauches in Segmente unter Verwendung von Perforationslinien möglich, wobei die Perforationslinien sich auf der Oberseite- und/oder der Unterseite des Leimschlauches befinden können

In einer Ausführungsform weist der Leimschlauch einen Durchmesser zwischen 3 und 10 mm, bevorzugt 5 und 9 mm auf. Die Länge eines einzelnen Segmentes des Leimschlauches kann zwischen 100 und 200 mm, bevorzugt zwischen 130 und 180 mm, insbesondere bevorzugt zwischen 150 und 170 mm betragen.

Die Verwendung eines Leimschlauches mit durch Siegelstellen voneinander getrennten Segmenten weist verschiedene Vorteile auf. So tritt bei Beschädigungen des Leimschlauches) während des Transports, der Lagerung oder der Verarbeitung bei einer Segmentierung lediglich der Klebstoff bzw. der Leim aus dem beschädigten Segment aus und entsprechend wird ein Leerlaufen des gesamten Leimschlauches verhindert. Des Weiteren ermöglicht eine Segmentierung des Leimschlauches auch die Verarbeitung von unterschiedlichen Formaten an Holzwerkstoffplatten, da diese im Format nur ein vielfaches der Einzelsegmentlänge der Leimschlauchsegmente entsprechen müssen (ein Trennen des Leimschlauches in der Siegelstelle ist problemlos möglich).

In einer weiteren Ausführungsform der vorliegen OSB-Platte besteht der Leimschlauch aus einem Kunststoffmaterial. Das Kunststoffmaterial sollte dabei so ausgewählt sein, dass es über eine bestimmte Festigkeit verfügt, so dass ein Aufreißen des Schlauches während der Herstellung und dem Transport der OSB-Platte vermieden wird, jedoch beim Verlegen der OSB-Platten geöffnet werden kann. Besonders bevorzugtes Kunststoffmaterial, das hier zum Einsatz kommt, ist Polyethylenterephthalat (PET), Polyamid (PA) und/oder Polyethylen (PE) oder eine Mischung davon. Es können aber auch beliebig andere Folien oder Verbundfolien zur Herstellung des Leimschlauches verwendet werden. Im Falle der Verwendung einer Polyamidfolie als Schlauchmaterial weist diese eine Dicke bzw. Stärke zwischen 50 und 100 µm, bevorzugt zwischen 70 und 80 µm auf.

Der vorliegend zum Einsatz kommende Klebstoff ist ausgewählt aus der Gruppe enthaltend Polyvinyle und Acrylate. Als besonders vorteilhaft ist die Verwendung von wasserhaltigen Klebestoffformulierungen wie Polyvinylacetat (PVAC) oder Ethylenvinylacetat (EVA). Selbstverständlich können auch andere Leime mit Wasser als Lösemittel eingesetzt werden. In einer Ausführungsform kann als Klebstoff ein PVAC Leim mit einem Feststoffgehalt zwischen 50 und 80 Gew.%, bevorzugt zwischen 60 und 79 Gew.%, insbesondere bevorzugt von 65 Gew.% verwendet werden.

In einer weitergehenden Ausführungsform der vorliegenden OSB-Platte, die als Platte natürlicherweise eine Oberseite und eine Unterseite aufweist, ist vorgesehen, dass die Plattenkanten jeweils an der Plattenoberseite eine Abrundung mit einem Radius zwischen 3 und 10 mm, bevorzugt zwischen 5 und 8 mm, insbesondere bevorzugt zwischen 6 und 7 mm aufweist; d.h. die Plattenkanten weisen an dem hervorstehenden und/oder dem zurückstehenden Bereich der Falz eine entsprechende Abrundung auf. Bei Zusammenfügen der Platten bilden die Abrundungen im verbundenen Zustand miteinander eine Fuge der Oberfläche, die verspachtelt werden kann.

Es ist ebenfalls in einer Variante vorgesehen, dass die im Bereich der Falzverbindung von zwei OSB-Platten eine mechanische Verbindung bzw. Befestigung vorgesehen, die bevorzugt bis in den Ständer des Ständerwerkes reicht, auf welchen die OSB-Platte befestigt wird. Eine solche mechanische Befestigung kann mit Nägeln, Schrauben oder Klammern erfolgen. Eine Klammerung bzw. Klammer besteht aus zwei Nägeln, die miteinander verbunden sind. Das Eintreiben der Klammer in die Falzverbindung erfolgt mit einer pneumatischen Klammerpistole.

Das erfindungsgemäß in einer OSB-Platte vorgesehene Profil weist eine Vielzahl von Vorteilen auf: So wird durch die Art der Überdeckung und Verbindungsmöglichkeit eine statische Wirkung erreicht. Durch die Abrundung an der Profiloberfläche kann der Plattenstoß verspachtelt werden. Durch die Überblattung 50/50 kann die Platte am Stoß über beide Lagen geklammert werden (mind. 30% Einsparung der Klammern). Durch die Nut bzw. Einlegekanal für einen Leimschlauch in das Falzprofil wird eine selbstleimende und luftdichte Verbindung zwischen den OSB-Platten an der Verbindungsstelle erreicht. Es wird ein kraftschlüssiger Verbund für geschlossene Oberflächen bereitgestellt. Die OSB-Platten können mittels Schrauben oder Klammern an dafür vorgesehenen Rahmen befestigt werden, so dass geschoßhohe Formate realisiert werden können.

In einer weiteren, bevorzugten Ausführungsform der vorliegenden OSB-Platte ist die Oberfläche der OSB-Platte mit mindestens einer Lage eines Papieres versehen.

In einer Variante kann vorgesehen sein, dass eine erste Papierlage mit mindestens einem Harz, insbesondere einen Formaldehyd-Harz imprägniert ist. Bei dieser ersten Papierlage handelt es sich insbesondere um Papierlage, die direkt auf der OSB-Oberfläche angeordnet ist. Bei dem Formaldehyd-Harz handelt es sich insbesondere im ein Melamin-Formaldehyd-Harz, Urea-Formaldehyd-Harz, Melamin-Urea-Formaldehyd-Harz.

Das für die erste Papierlage verwendete Papier weist ein Flächengewicht zwischen 30 und 200 g/m², bevorzugt zwischen 50 und 150 g/m², insbesondere bevorzugt zwischen 80 und 120 g/m² auf.

In einer anderen Variante ist eine zweite Papierlage auf der ersten Papierlage vorgesehen, wobei zweite Papierlage bevorzugt aus einem rohen (d.h. unbehandelten, nicht imprägnierten) Papier besteht. Das Flächengewicht des Rohpapiers der zweiten Papierlage liegt zwischen 30 und 300 g/m², bevorzugt zwischen 50 und 250 g/m², insbesondere bevorzugt zwischen 100 und 120 g/m². Das Anordnen eines Rohpapiers als äußerste Schicht auf einer OSB-Platte ermöglicht die Bereitstellung eines Substrates, auf welchem direkt Innenwandfarbe, Spachtelmasse oder Klebstoff für Tapeten aufgebracht werden kann.

Es ist auch möglich, hydrophobe Komponenten als Schutz gegen Klimaeinflüsse oder einen dünnen Metallfilm zur Wärmereflexion auf die zweite Papierlage aufzubringen.

In einer besonders bevorzugten Ausführungsform ist die mindestens eine Papierlage in Form eines Kartonagepapiers ausgeführt.

Das Kartonagepapier weist eine Dicke zwischen 0,5 und 5 mm, bevorzugt zwischen 1 und 4 mm, insbesondere bevorzugt zwischen 2 und 3 mm auf. In einer Variante kann die Dicke des Kartonagepapiers zwischen 0,8 und 2,6 mm, z.B. bei 1, 5 mm liegen.

Das Kartonagepapier wird bevorzugt vor der Einbringung des Falzprofils in die Plattenkanten auf die Oberfläche der OSB-Platte aufkaschiert. Beim Kaschieren von dickere Pappen bzw. Papierkartonagen wird ein Klebstrich auf die Oberseite der OSB aufgebracht und anschließend die Kartonage auf der Oberseite abgerollt. Sowohl OSB-Platte als auch die Kartonage bewegen sich durch die Kaschieranlage. Zwischen den Walzen wirkt zusätzlich ein linienförmiger Druck, durch den die Verbindung zwischen OSB-Platte und Kartonage unterstützt wird.

Es ist auch generell möglich und vorstellbar, dass das mindestens eine Kartonagepapier mit der OSB-Platte in einer Kurztaktpresse verpresst wird. In diesem Falle wird auf die Oberfläche der OSB-Platte zunächst ein beharztes Papier aufgebracht, auf welches das Kartonagepapier gelegt wird. Das Papier kann z.B. mit einem oder mehreren Harzen aus der Gruppe umfassend Melamin-Formaldehyd-Harz, Harnstoff-Melamin-Formaldehyd-Harz, Phenol-Melamin-Formaldehyd-Harz getränkt bzw. imprägniert sein. Durch das anschließende Verpressen z.B. in einer Kurztaktpresse bei erhöhten Temperaturen kommt es zu einem Anschmelzen des Harzes im beharzten Papier, welches als Adhäsionsmittel bzw. Klebstoff zwischen OSB-Oberfläche und Kartonagepapier wirkt.

Auch ist es möglich, dass mindestens ein Kartonagepapier direkt beim Herstellungsprozess der OSB-Platte auf die selbige aufzubringen. Dabei wird nach dem Aufbringen der OSB-Strands auf ein Transportband in der Reihenfolge untere Deckschicht - mittlere Deckschicht - obere Deckschicht das Kartonagepapier als Auflage online auf der oberen Deckschicht abgelegt und der gesamte Schichtaufbau unter Druck- und Temperatureinfluss verpresst.

Die Beschichtung bzw. Kaschierung von OSB-Oberflächen mit Kartonagepapier weist eine Vielzahl von Vorteilen auf: Durch einseitiges Aufbringen auf eine Plattenoberfläche wird eine glatte beschichtbare Oberfläche mit den Eigenschaften wie eine Gipsbauplatte oder Gipsfaserplatte bereitgestellt, die über die zusätzlichen Eigenschaften einer Holzplatte, wie sehr gute Befestigungsmöglichkeiten (z.B. mittels Schrauben oder Klammern) oder Spezialdübel verfügt. Eine derart modifizierte OSB-Platte kann als Finish-Oberfläche eingesetzt werden. Auch sind die modifizierten OSB-Platten statisch und luftdicht einsetzbar.

Die vorliegende modifizierte OSB-Platte kommt insbesondere zur Herstellung von Wand- und/oder Deckenverkleidung zum Einsatz.

Hierfür kann die vorliegende OSB-Platte in verschiedenen Formaten verwendet werden.

In einem ersten Format werden OSB-Platten mit einer Länge zwischen 2000-5000 mm, bevorzugt 2500 mm, und einer Breite zwischen 600 -2800 mm, bevorzugt zwischen 625-2500 mm, und an den Längskanten mit dem erfindungsgemäßen Profil aus einfacher Falz und Leimschlauch bereitgestellt. Die Stirnseiten sind in diesem Format mit einem stumpfen Stoß (d.h. ohne Kantenbearbeitung) versehen. Dieses OSB-Plattenformat kommt insbesondere in Geschosshöhe zum Einsatz, wobei die Breite der Heißpresse und damit die maximale Breite der Platte der Höhe eines Geschosses (Etage) beim Bauen entsprechen. Somit deckt die Breite der OSB eine ganze Geschosshöhe (Etagenhöhe) ab. Dies erfolgt meist in solchen Bauten, in denen die tragende Struktur weitgehend durch ein Holzständerwerk realisiert wird - dieses Ständerwerk wird dann statisch aussteifend mit den hier in Rede stehenden OSB beplankt. Daher sind die OSB geschosshoch, wobei entlang der Geschoßhöhe die OSB-Platten einen stumpfen Stoß (d.h. ohne Falz) aufweisen. Die Falze sind dann an den OS-Platten vertikal zur Geschoßhöhe vorgesehen.

In einem zweiten Format werden OSB-Platten mit einer Länge zwischen 2000-3000 mm, bevorzugt 2500 mm, und einer Breite zwischen 500-1000 mm, bevorzugt 625 mm, und an den Längskanten mit dem erfindungsgemäßen Profil aus einfacher Falz und Leimschlauch bereitgestellt. Die Stirnseiten sind in diesem Format mit bekannter Nut- und Federprofilierung ausgeführt, wobei auch hier bevorzugt eine Abrundung der Plattenkanten vorgesehen ist. Dieses OSB-Plattenformat kommt insbesondere als Verlegeplatte zum Einsatz.

Die vorliegende OSB-Platte kommt ebenfalls in einem Verfahren zum Verbinden (oder Verlegen) von zwei oder mehreren OSB-Platten mit den Merkmalen des Anspruchs 15 J Z zum Einsatz.

In diesem Verfahren wird eine erste OSB-Platte mit den obigen Merkmalen mit einer anderen (zweiten) OSB-Platte mit den obigen Merkmalen verbunden, wobei der Falz der einen ersten OSB-Platte auf dem komplementären Falz der weiteren zweiten OSB-Platte gelegt und zusammen gepresst wird, wobei durch das Zusammenpressen der beiden OSB-Platten die alternierenden symmetrischen Erhebungen der oberen Falz ein Öffnen eines in der Nut der unteren Falz eingelegten Leimschlauches bewirken und ein Leim aus dem Leimschlauch freigesetzt wird.

Durch das Verbinden bzw. Verlegen der OSB-Platten kommt es zur Ausbildung einer Fuge zwischen den verlegten Platten, die anschließend in bekannter Weise verspachtelt werden kann.

Im Anschluss an das Verspachteln kann die Oberfläche in Analogie zu den konventionellen Gipsbauplatten weiter bearbeitet werden, z.B. Streichen, Tapezieren etc..

Aspekte der Erfindung werden nachfolgend unter Bezugnahme auf die Figuren der Zeichnungen Ausführungsbeispielen näher erläutert. Es zeigen:
- Figur 1: eine schematische Querschnittsansicht einer OSB-Platte;

- Figur 2: eine seitliche Draufsicht auf die in Figur 1 gezeigten Ansicht einer OSB-Platte,
- Figur 3A: eine Ansicht eines ersten Verlegeformats der OSB-Platte, und
- Figur 3B: eine Ansicht eines zweiten Verlegeformats der OSB-Platte.

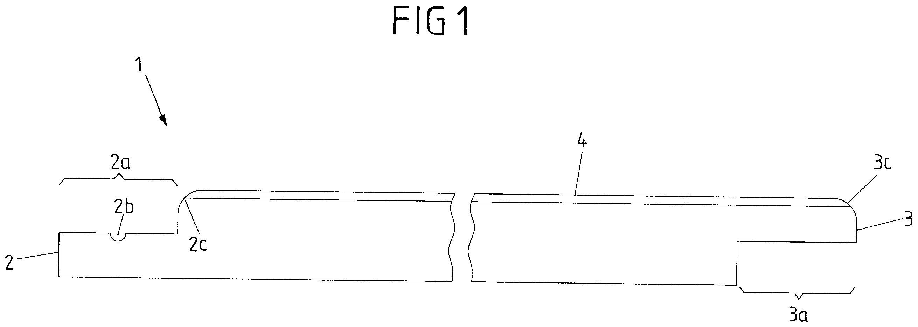

Figur 1 zeigt eine schematische Querschnittsansicht auf eine OSB-Platte 1 mit einer Breite zwischen 625-2800 mm, die an sich gegenüberliegenden Plattenkanten 2, 3 jeweils mit einem einfachen Falz 2a, 3a versehen sind, wobei beide Falze 2a, 3a komplementär zueinander ausgebildet sind.

Entsprechend steht der Falz 2a in der Plattenkante 2 in einem unteren Bereich der Plattenkante 2 hervor und in einem oberen Bereich zurück, wobei im Falle des komplementären Falzes 3a der obere Bereich der Plattenkante 3 hervorsteht und der untere Bereich zurücksteht.

Die Breite der beiden Falze 2a, 3a beträgt jeweils 30 mm. Die Tiefe der Falze entspricht jeweils Hälfte der Dicke der OSB-Platte; d.h. bei einer Plattendicke zwischen 9 und 40 mm beträgt die Falztiefe 4,5 bis 20 mm.

In die Oberfläche des Falzes 2a ist eine abgerundete Nut 2b als Einlegekanal für einen Leimschlauch bzw. Leimschnur vorgesehen. Die abgerundete Nut 2b weist einen Radius von 3 mm auf.

Auf die Oberseite der OSB-Platte 1 ist eine Lage eines Kartonagepapiers 4 mit einer Dicke zwischen 0,8-2,6 mm aufkaschiert.

Die Plattenkanten 2, 3 inklusive des Kartonagepapiers 4 sind zusätzlich abgerundet (Radius ca. 6 mm), wobei die Plattenkante 2 an dem zurückstehenden Bereich der Falz 2a die Abrundung 2c und die Plattenkante 3 an dem hervorstehenden Bereich der Falz 3a die entsprechende Abrundung 3c aufweisen. Bei Zusammenfügen der Platten bilden die Abrundungen im verbundenen Zustand miteinander eine Fuge der Oberfläche, die verspachtelt werden kann.

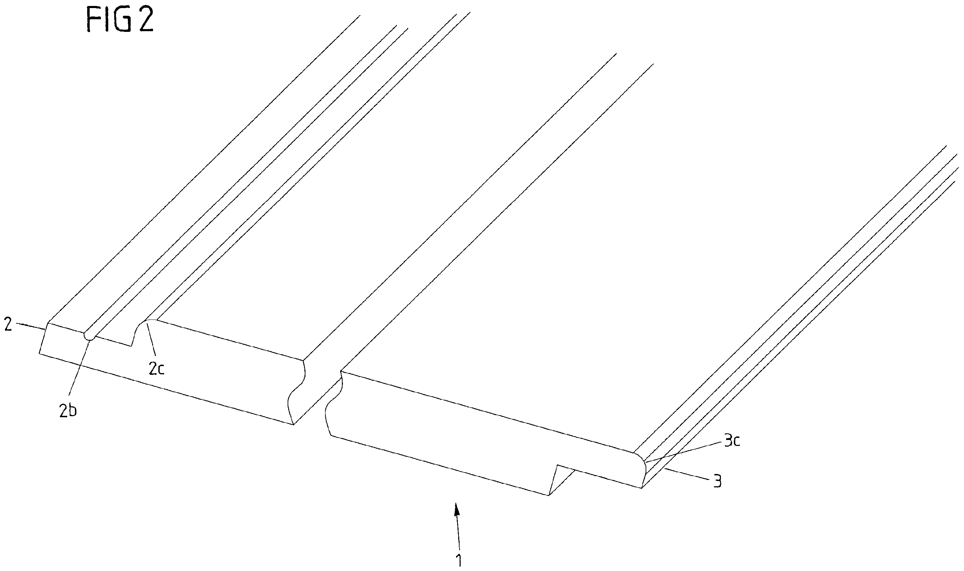

Figur 2 zeigt die Ausführungsform der Figur 1 in einer seitlichen, perspektivischen Draufsicht. Hierfür kann die vorliegende OSB-Platte in verschiedenen Formaten verwendet werden.

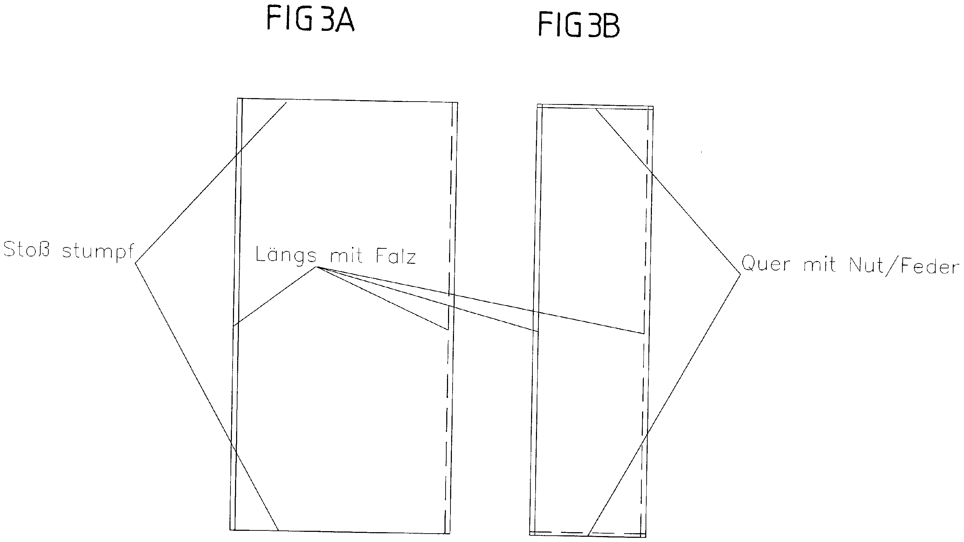

In Figuren 3A, 3B sind zwei Formatvarianten der vorliegenden OSB Platten gezeigt.

Gemäß einem ersten Format (Fig. 3A) wird eine OSB-Platte mit einer Länge von 2500 mm und einer Breite zwischen 625-2800 mm bereitgestellt, die an den Längskanten mit dem erfindungsgemäßen Profil aus einfacher Falz und Leimschlauch versehen ist. Die Stirnseiten sind in diesem Format mit einem stumpfen Stoß (d.h. ohne Kantenbearbeitung) versehen. Dieses OSB-Plattenformat kommt insbesondere als sog. Geschosshöhe zum Einsatz.

Gemäß einem zweiten Format (Fig. 3B) werden OSB-Platten mit einer Länge von 2500 mm und einer Breite von 675 mm bereitgestellt, die ebenfalls an den Längskanten mit dem erfindungsgemäßen Profil aus einfacher Falz und Leimschlauch versehen ist. Die Stirnseiten sind in diesem Format mit bekannter Nut- und Federprofilierung ausgeführt, wobei auch hier bevorzugt eine Abrundung der Plattenkanten vorgesehen ist. Dieses OSB-Plattenformat kommt insbesondere als Verlegeplatte zum Einsatz.

### Ausführungsbeispiel

Eine OSB/3 oder OSB/4 mit einer Dicke zwischen 9 bis 40 mm, einer Länge von 2500 mm und einer Breite von 1280 mm wird zunächst in einer Kaschieranlage mit einer Papierkartonage mit einer Dicke von 0,8-2,6 versehen. Es sei darauf hingewiesen, dass diese Formate lediglich beispielhafter Natur sind, und nicht als begrenzend anzusehen sind.

Anschließend wird in einer Fräsanlage entlang der beiden Längskanten ein einfacher Falz eingefügt. Die Falze haben jeweils eine Breite von 30 mm und eine Tiefe von 10 mm.

Die Plattenkanten werden abgerundet. Dies erfolgt in Nut- und Feder-Anlagen, die entsprechend mit Werkzeugen für diese oder jene Profilierung durch Umrüsten ausgestattet werden.

In den unteren Falz wird eine abgerundete Nut (Radius 3 mm) als Einlegekanal für eine Leimschnur mittels eines Fräsers eingebracht.

In die Nut ist ein Leimschlauch mit einem Durchmesser von 9 mm eingelegt, der aus abgeteilten Einzelsegmenten mit einer Länge von ca. 169 mm bestehen. Die für den Leimschlauch verwendete Polyamidfolie hat eine Stärke von 70 - 80 µm. Der Leimschlauch ist mit einem PVAC-Leim mit einem Feststoffgehalt von 65 Gew. % gefüllt. Zwischen den Segmenten befindet sich eine Siegelung mit einer Breite von ca. 2 mm.

## Patentansprüche

1. OSB- Platte (1) zur Verwendung als Wand- oder Deckenpaneel mit mindestens zwei einander gegenüberliegenden Plattenkanten (2, 3), insbesondere zwei sich gegenüberliegenden Längskanten (2, 3),
wobei jede der zwei sich gegenüberliegenden Plattenkanten (2, 3) einen Absatz in Form eines einfachen Falz aufweist (2a, 3a),
wobei der Falz in einer Plattenkante (2) in einem unteren Bereich der Plattenkante als unterer Falz (2a) hervorsteht und der Falz in der gegenüberliegenden Plattenkante (3) in einem oberen Bereich als oberer Falz (3a) hervorsteht, wobei der untere Falz (2a) in der einen Plattenkante komplementär zu dem oberen Falz (2a, 3a) in der gegenüberliegenden Plattenkante ist;
**dadurch gekennzeichnet, dass**
in dem unteren Falz (2a) mindestens eine Nut (2b) zur Aufnahme von mindestens einem Leimschlauch und auf dem oberen Falz (3a) ein erhabener Steg mit alternierenden symmetrischen Erhebungen vorgesehen sind, wobei der Steg komplementär zu der Nut (2b) im unteren Falz (2a) angeordnet ist.

2. OSB-Platte nach Anspruch 1, **dadurch gekennzeichnet, dass** die Erhebungen des Steges auf der oberen Falz (3a) eine jeweils von der OSB-Platte wegweisende spitzförmig zulaufende Geometrie aufweisen.

3. OSB-Platte nach einem der vorhergehenden Ansprüche, **dadurch gekennzeichnet, dass** die Seiten der jeweiligen Erhebung bevorzugter Weise jeweils gleich lang sind.

4. OSB-Platte nach einem der vorhergehenden Ansprüche, **dadurch gekennzeichnet, dass** die Erhebungen eine Höhe von 1 bis 5 mm, bevorzugt 2 bis 4 mm aufweisen.

5. OSB-Platte nach einem der vorhergehenden Ansprüche, **dadurch gekennzeichnet, dass** die Breite des Falzes (2a, 3a) in den sich gegenüberliegenden Plattenkanten (2, 3) jeweils zwischen 20 und 40 mm, bevorzugt zwischen 25 und 35 mm, insbesondere bevorzugt 30 mm beträgt.

6. OSB-Platte nach einem der vorhergehenden Ansprüche, **dadurch gekennzeichnet, dass** die Tiefe des Falzes (2a, 3a) mindestens einem Drittel, bevorzugt mindestens der Hälfte der Dicke der OSB-Platte entspricht.

7. OSB-Platte nach einem der vorhergehenden Ansprüche, **dadurch gekennzeichnet, dass** die mindestens eine Nut (2b) für den mindestens einen Leimschlauch mit einem Radius zwischen 1 und 5 mm, bevorzugt zwischen 2 und 4 mm, insbesondere bevorzugt 3 mm in die Oberfläche der Falz eingebracht ist.

8. OSB-Platte nach einem der vorhergehenden Ansprüche, **dadurch gekennzeichnet, dass** der mindestens eine Leimschlauch ein durchgängiger Schlauch ist oder ein Schlauch ist, der entlang seiner Länge in einzelne Segmente unterteilt ist.

9. OSB-Platte nach einem der vorhergehenden Ansprüche, **dadurch gekennzeichnet, dass** der mindestens eine Leimschlauch einen Durchmesser zwischen 3 und 10 mm, bevorzugt zwischen 5 und 9 mm aufweist.

10. OSB-Platte nach einem der vorhergehenden Ansprüche, **dadurch gekennzeichnet, dass** die Plattenkanten jeweils an der Plattenoberseite eine Abrundung mit einem Radius zwischen 3 und 10 mm, bevorzugt zwischen 5 und 8 mm, insbesondere bevorzugt zwischen 6 und 7 mm aufweist.

11. OSB-Platte nach einem der vorhergehenden Ansprüche, **dadurch gekennzeichnet, dass** in den komplementären sich überlagernden Falzen (2a, 3a) der Plattenkanten eine Klammerung erfolgen kann.

12. OSB-Platte nach einem der vorhergehenden Ansprüche, **dadurch gekennzeichnet, dass** die Plattenoberseite der OSB-Platte mit mindestens einer Lage eines Kartonagepapiers (4) versehen ist.

13. OSB-Platte nach Anspruch 12, **dadurch gekennzeichnet, dass** das Kartonagepapier (4) eine Dicke zwischen 0,5 und 5 mm, bevorzugt zwischen 1 und 4 mm, insbesondere bevorzugt zwischen 2 und 3 mm aufweist.

14. Verwendung einer OSB-Platte nach einem der vorhergehenden Ansprüche zur Herstellung von Wand- und/oder Deckenverkleidungen.

15. Verfahren zum Verbinden beziehungsweise Verlegen einer ersten OSB-Platte nach einem der Ansprüche 1 - 13 mit einer weiteren zweiten OSB-Platte nach einem der Ansprüche 1 - 13, **dadurch gekennzeichnet, dass** die obere Falz (3a) der einen ersten OSB-Platte auf die komplementäre untere Falz (2a) der weiteren zweiten OSB-Platte gelegt wird und zusammen gepresst wird, wobei durch das Zusammenpressen der beiden OSB-Platten die alternierenden symmetrischen Erhebungen der oberen Falz (3a) ein Öffnen eines in der Nut (2b) der unteren Falz (2a) eingelegten Leimschlauches bewirken und ein Leim aus dem Leimschlauch freigesetzt wird.

## Claims

1. OSB board (1) having at least two opposite board edges (2, 3), in particular two opposite longitudinal edges (2, 3),
each of the two opposite board edges (2, 3) having an offset in the form of a simple rebate (2a, 3a),
wherein the rebate in one board edge (2) protrudes in a lower region of the board edge as a lower rebate (2a) and the rebate in the opposite board edge (3) protrudes in an upper region as an upper rebate (3a), wherein the lower rebate (2a) in the one board edge is complementary to the upper rebate (2a, 3a) in the opposite board edge;
**characterized in that**
at least one groove (2b) for receiving at least one glue tube is provided in the lower rebate (2a) and a raised web with alternating symmetrical elevations is provided on the upper rebate (3a), wherein the web is arranged complementary to the groove (2b) in the lower rebate (2a).

2. OSB board according to claim 1, **characterized in that** the elevations of the web on the upper rebate (3a) have a pointed geometry pointing away from the OSB board.

3. OSB board according to one of the preceding claims, **characterized in that** the sides of the respective elevation are preferably each of the same length.

4. OSB board according to one of the preceding claims, **characterized in that** the elevations have a height of 1 to 5 mm, preferably 2 to 4 mm.

5. OSB board according to one of the preceding claims, **characterized in that** the width of the rebate (2a, 3a) in the opposing board edges (2, 3) is in each case between 20 and 40 mm, preferably between 25 and 35 mm, in particular preferably 30 mm.

6. OSB board according to one of the preceding claims, **characterized in that** the depth of the rebate (2a, 3a) is at least one third, preferably at least half, of the thickness of the OSB board.

7. OSB board according to one of the preceding claims, **characterized in that** the at least one groove (2b) for the at least one glue tube with a radius between 1 and 5 mm, preferably between 2 and 4 mm, in particular preferably 3 mm, is made in the surface of the rebate.

8. OSB board according to any of the preceding claims, **characterized in that** the at least one glue tube is a continuous tube or is a tube which is divided into individual segments along its length.

9. OSB board according to one of the preceding claims, **characterized in that** the at least one glue tube has a diameter between 3 and 10 mm, preferably between 5 and 9 mm.

10. OSB board according to one of the preceding claims, **characterized in that** the board edges each have a rounding with a radius of between 3 and 10 mm, preferably between 5 and 8 mm, in particular preferably between 6 and 7 mm, on the upper side of the board.

11. OSB board according to one of the preceding claims, **characterized in that** stapling can be performed in the complementary overlapping rebates (2a, 3a) of the board edges.

12. OSB board according to any of the foregoing claims, **characterized in that** the upper side of the OSB board is provided with at least one layer of a cardboard paper (4).

13. OSB board according to claim 12, **characterized in that** the cardboard paper (4) has a thickness between 0.5 and 5 mm, preferably between 1 and 4 mm, in particular preferably between 2 and 3 mm.

14. Use of an OSB board according to one of the preceding claims for the production of wall and/or ceiling coverings.

15. A method for connecting or laying a first OSB board according to one of claims 1 - 13 with a further second OSB board according to one of claims 1 - 13, **characterized in that** the upper rebate (3a) of the one first OSB board is laid on the complementary lower rebate (2a) of the further second OSB board and is pressed together, wherein, by pressing the two OSB boards together, the alternating symmetrical elevations of the upper rerbate (3a) cause a glue tube inserted in the groove (2b) of the lower rebate (2a) to open and a glue is released from the glue tube.

## Revendications

1. Panneau OSB (1) pour son utilisation en tant que panneau mural ou de plafond avec au moins deux bords de panneau (2, 3) opposés l'un à l'autre, en particulier deux bords longitudinaux (2, 3) opposés,
dans lequel chacun des deux bords de panneau (2, 3) opposés présente un épaulement sous forme d'une simple feuillure (2a, 3a),
dans lequel la feuillure dans un bord de panneau (2) fait saillie dans une zone inférieure du bord de panneau sous forme de feuille inférieure (2a) et la feuillure fait saillie dans le bord de panneau (3) opposé dans une zone supérieure en tant que feuillure supérieure (3a), dans lequel la feuillure inférieure (2a) dans l'un des bords de panneau est complémentaire de la feuillure supérieure (2a, 3a) dans le bord de panneau opposé ;
**caractérisé en ce que**
au moins une rainure (2b) destinée à loger au moins un cordon de colle est prévue dans la feuillure inférieure (2a) et une nervure saillante avec des saillies symétriques en alternance est prévue sur la feuillure supérieure (3a), dans lequel la nervure est disposée dans la feuillure inférieure (2a) de manière complémentaire à la rainure (2b).

2. Panneau OSB selon la revendication 1, **caractérisé en ce que** les saillies de la nervure sur la feuillure supérieure (3a) présentent une géométrie se terminant en forme de pointe, orientée respectivement dans la direction opposée au panneau OSB.

3. Panneau OSB selon l'une quelconque des revendications précédentes, **caractérisé en ce que** les faces de la saillie concernée sont de manière préférée respectivement de même longueur.

4. Panneau OSB selon l'une quelconque des revendications précédentes, **caractérisé en ce que** les saillies présentent une hauteur de 1 à 5 mm, de préférence de 2 à 4 mm.

5. Panneau OSB selon l'une quelconque des revendications précédentes, **caractérisé en ce que** la largeur de la feuillure (2a, 3a) dans les bords de panneau (2, 3) opposés atteint respectivement entre 20 et 40 mm, de préférence entre 25 et 35 mm, de manière particulièrement préférée 30 mm.

6. Panneau OSB selon l'une quelconque des revendications précédentes, **caractérisé en ce que** la profondeur de la feuillure (2a, 3a) correspond à au moins un tiers, de préférence à au moins la moitié de l'épaisseur du panneau OSB.

7. Panneau OSB selon l'une quelconque des revendications précédentes, **caractérisé en ce que** l'au moins une rainure (2b) pour l'au moins un cordon de colle est ménagée avec un rayon entre 1 et 5 mm, de préférence entre 2 et 4 mm, de manière particulièrement préférée de 3 mm, dans la surface de la feuillure.

8. Panneau OSB selon l'une quelconque des revendications précédentes, **caractérisé en ce que** l'au moins un cordon de colle est un cordon continu ou un cordon qui est divisé en différents segments le long de sa longueur.

9. Panneau OSB selon l'une quelconque des revendications précédentes, **caractérisé en ce que** l'au moins un cordon de colle présente un diamètre entre 3 et 10 mm, de préférence entre 5 et 9 mm.

10. Panneau OSB selon l'une quelconque des revendications précédentes, **caractérisé en ce que** les bords de panneau présentent respectivement au niveau de la face supérieure de panneau un arrondi avec un rayon entre 3 et 10 mm, de préférence entre 5 et 8 mm, de manière particulièrement préférée entre 6 et 7 mm.

11. Panneau OSB selon l'une quelconque des revendications précédentes, **caractérisé en ce qu'**un agrafage peut s'effectuer dans les feuillures (2a, 3a) complémentaires se chevauchant des bords de panneau.

12. Panneau OSB selon l'une quelconque des revendications précédentes, **caractérisé en ce que** la face supérieure de panneau du panneau OSB est pourvue d'au moins une couche d'un carton (4).

13. Panneau OSB selon la revendication 12, **caractérisé en ce que** le carton (4) présente une épaisseur entre 0,5 et 5 mm, de préférence entre 1 et 4 mm, de manière particulièrement préférée entre 2 et 3 mm.

14. Utilisation d'un panneau OSB selon l'une quelconque des revendications précédentes pour la fabrication de revêtements muraux et/ou de plafond.

15. Procédé d'assemblage ou de pose d'un premier panneau OSB selon l'une quelconque des revendications 1 à 13 avec un autre deuxième panneau OSB selon l'une quelconque des revendications 1 à 13, **caractérisé en ce que** la feuillure supérieure (3a) de l'un premier panneau OSB est posée sur la feuillure inférieure (2a) complémentaire de l'autre deuxième panneau OSB et pressée conjointement, dans lequel, du fait de la pression conjointe des deux panneaux OSB, les saillies symétriques en alternance de la feuillure supérieure (3a) entraînent une ouverture d'un cordon de colle inséré dans la rainure (2b) de la feuillure inférieure (2a) et une colle est libérée du cordon de colle.
